# EUROPEAN PATENT SPECIFICATION

(11) **EP 3 596 300 B1**
(45) Date of publication and mention of the grant of the patent: **02.02.2022**
(21) Application number: 18767070.8
(22) Date of filing: 13.03.2018
(51) Int. Cl.: E21B 17/02, E21B 17/08, E21B 33/038, E21B 23/02, F16B 37/08

(54) **REMOTELY ACTIVATED CONNECTION DEVICE FOR A SPIRAL SHOULDER CONNECTION**
FERNAKTIVIERTE VERBINDUNGSVORRICHTUNG FÜR EINE SPIRALSCHULTERVERBINDUNG
DISPOSITIF DE LIAISON ACTIVÉ À DISTANCE POUR UNE LIAISON D'ÉPAULEMENT EN SPIRALE

(30) Priority: 14.03.2017 US 201762471015 P; 12.03.2018 US 201815918509
(43) Date of publication of application: 22.01.2020
(73) Proprietor: Reel Power Licensing Corp., Oklahoma City, OK 73179 (US)
(72) Inventor: BAUGH, Benton, Frederick, Oklahoma City, OK 73179 (US); TRITCHLER, Stephanie, Oklahoma City, OK 73179 (US); REKIETA, Christopher, D., Oklahoma City, OK 73179 (US)
(74) Representative: CSY London
(86) International application number: PCT/US2018/022102
(87) International publication number: WO 2018/169908

(56) References cited:
- US-A- 3 321 217
- US-A- 4 699 215
- US-A- 5 332 043
- US-A- 5 522 681
- US-A- 5 522 681
- US-A1- 2009 102 182
- US-A1- 2009 102 182
- US-A1- 2010 288 503
- US-A1- 2011 227 336
- US-B2- 7 686 087

## Description

### BACKGROUND OF INVENTION

### 1. Field of the Invention

In general, the present invention relates to a method for remotely connecting to a threaded profile member. More particularly, the present invention provides for remotely connecting such as but not limited to a service tool package to a Christmas tree utilizing a spiral shoulder such as but not limited to an Acme thread. Discussed is also a remotely actuated connector for hydraulic fracturing that may feature a remote blind connection, night cap, ball drop, and or plug.

### 2. Description of the Prior Art

The ability to make a mechanical connection between two members has had many varied methods including tying them together with ropes, a threaded connection, welding, gluing, friction, and a collet type connection. Of these, the collet type is the most amenable to being remotely connected. The collet type generally means that one of the members collapses or expands to engage the other member. Collet type connectors can be generally divided into two categories, straight diameter and shouldered. Straight diameter collets are used in numerous applications such as machine tools to engage round work pieces, as chucks for pencil lead, and collapsible pressure fittings around tubing.

Shouldered collets are generally used in applications requiring both a high axial load between the two connected members and repeated connections and disconnections. The torus type connector shown in U.S. Patent 6,609,734 is an example of this type connector, which is for connecting a subsea blowout preventer stack to a subsea wellhead. It must be done repeatedly remotely and as they are typically 18 ¾" bore x 10,000 P.S.I. working pressure units, the axial loading is in excess of three million pounds. On these units, the collets or locking segments (61) are pushed radially onto shoulders or hubs 10, 11, and 51. The mating surfaces such as 53 are typically on a twenty-five degree angle and are conical in shape. The conical shapes are on both the hubs and the collets or locking segments to provide a large area of contact to withstand the high axial loadings.

Similar connectors such as shown in U.S. Patent 3,096,999 have the dogs 34 driven inwardly by the conical inner surface 28a of ring 28 such that when an outward force on tapered shoulders 36 and 38 is generated on the dogs 34 by the centerline tensioning caused by bore pressure, the ring 28 is urged in the unintended released position. U.S. Patent 4,516,795 compensates for this by substituting a torus driver shoe R for the conical inner surface, allowing the potential releasing forces to be cancelled. This patent moves to a force balanced position and travels a little further such that the forces tend to lock it more against a shoulder, or functionally locking it over center much like a typical light switch does.

Another type of situation exists on land wellheads where the upper connection of the valves atop the wellhead or the Christmas tree typically has an Acme thread for connection. The Acme thread profile is a relatively rugged thread construction and the most common profile used is four threads per inch. When the two members are brought together, the nut member of the tree cap is simply manually screwed onto the male threaded tree cap.

This procedure has long required the direct intervention of a person when landing heavy equipment loads of service equipment, such as a blowout preventer stack and a coiled tubing unit, onto the top of a Christmas tree for servicing. The coiled tubing unit is a tractor type mechanism which will lower a string of coiled tubing coming from a reel into the well. This assembly can easily weigh 20,000 lbs.

This procedure has been complicated by the addition of landing large assemblies of valves called fracking trees onto the top of the Christmas tree, and then landing the other service equipment onto the top of the fracking trees. At this time, the need for the remote connection can be more than twenty feet into the air. To further complicate this, the area around the Christmas tree can be a restricted area due to the nature of the fracking operations on adjacent Christmas trees. A further method of connecting a connecting member to a threaded profile is know for instance form US A 5 522 681, which however also suffers from the above mentioned drawbacks.

Thus, there is a need for a method that provides quick and reliable means for securing equipment such as but not limited to a service tool package to a Christmas tree previously attached to a wellhead. The above discussed limitations in the prior art is not exhaustive. The current invention provides an inexpensive, time saving, more reliable method where the prior art fails.

### SUMMARY OF THE INVENTION

In view of the foregoing disadvantages inherent in the known types of conventional connections now present in the prior art, the present invention provides a new and improved method of use that provides faster and safe performance. As such, the general purpose of the present invention, which will be described subsequently in greater detail, is to provide a new and improved hydraulic connector for use with a wellhead, fracking operation, and or Christmas tree previously attached to a wellhead, which has all the advantages of the prior art devices and none of the disadvantages.

It is, therefore, contemplated that the present invention is a method of connecting a connecting member to a threaded profile member, comprising providing one or more segments with a female threaded profile, holding said segments out of engagement from said threaded profile member while engaging said connecting member with said threaded profile member, releasing said one or more segments to allow engagement with said threaded profile member, moving said one or more segments axially of said threaded profile member to allow the threads of said segments to engage the threads of said threaded profile member, causing said threads of said segments to engage said threads of said threaded profile member, securing said segments in the engaged position and so forth.

There has thus been outlined, rather broadly, the more important features of the invention in order that the detailed description thereof that follows may be better understood and in order that the present contribution to the art may be better appreciated. There are, of course, additional features of the invention that will be described hereinafter and which will form the subject matter of the claims appended hereto.

In this respect, before explaining at least one embodiment of the invention in detail, it is to be understood that the invention is not limited in this application to the details of construction and to the arrangements of the components set forth in the following description or illustrated in the drawings. The invention is capable of other embodiments and of being practiced and carried out in various ways. Also, it is to be understood that the phraseology and terminology employed herein are for the purpose of description and should not be regarded as limiting. As such, those skilled in the art will appreciate that the conception upon which this disclosure is based may readily be utilized as a basis for the designing of other structures, methods and systems for carrying out the several purposes of the present invention.

Therefore, it is an object of the present invention to provide a new and improved remotely activated connector method for use with a wellhead and or Christmas tree previously installed on a wellhead to other equipment such as but not limited to a fracking tree.

Furthermore, an object of the present invention is to provide a new and improved remotely activated connector method, which provides shouldered collets that collapse to engage a threaded member and expand to disengage the threaded member by use of but not limited to hydraulic pressure allowing for remote connecting and disengaging thereby eliminating a worker from manually doing the same and making these operations much safer.

There is also discussed a new and improved remotely activated connector, which may provide a hands free connection without requiring orientation of the members being connected.

Furthermore, there is discussed a new and improved remotely activated connector apparatus, system and method, which is of a durable and reliable construction and may be utilized in numerous types of wellhead applications and or Christmas tree applications.

Even furthermore, there is discussed a new and improved remotely activated connector apparatus, system and method, which is susceptible to a low cost of installation and labor, which accordingly is then susceptible to low prices of sale to the consuming industry, thereby making such a system economically available to those in the field.

Still, there is discussed a new and improved remotely activated connector, which provides all of the advantages of the prior art while simultaneously overcoming some of the disadvantages normally associated therewith.

These, together with other objects of the invention, along with the various features of novelty, which characterize the invention, are pointed out with particularity in the claim annexed to and forming a part of this disclosure. For a better understanding of the invention, its operating advantages, and the specific objects attained by its uses, reference should be had to the accompanying drawings and descriptive matter in which there are illustrated the embodiment of the invention.

### BRIEF DESCRIPTION OF THE PICTORIAL ILLUSTRATIONS,

### GRAPHS, DRAWINGS, AND APPENDICES

The invention will be better understood and objects other than those set forth above will become apparent when consideration is given to the following detailed description thereof. Such description makes reference to the annexed pictorial illustrations, graphs, drawings and appendices.
Figure 1 is generally a side view of a Christmas tree in accordance with a preferred embodiment of the current invention.
Figure 2 is generally a side view of a service tool package being landed on the Christmas tree of Figure 1 in accordance with a preferred embodiment of the current invention.
Figure 3 is generally a half cross section of the connector in the unlocked position in accordance with a preferred embodiment of the current invention.
Figure 3A is generally an enlarged portion of Figure 3 showing the thread profile engagement in accordance with a preferred embodiment of the current invention.
Figure 4 is generally a half cross section of the connector in the partially locked position in accordance with a preferred embodiment of the current invention.
Figure 4A is generally an enlarged portion of Figure 4 showing the thread profile engagement in accordance with a preferred embodiment of the current invention.
Figure 5 is generally a half cross section of the connector in the locked position in accordance with a preferred embodiment of the current invention.
Figure 5A is generally an enlarged portion of Figure 5 showing the thread profile engagement in accordance with a preferred embodiment of the current invention.
Figure 6 is generally a perspective view of a tang body portion of a connector in accordance with a preferred embodiment of the current invention.
Figure 7 is generally a perspective view of a group of segment dogs in accordance with a preferred embodiment of the current invention.
Figure 8 is generally an exploded view of the main component of the connector in accordance with a preferred embodiment of the current invention.

### DETAILED DESCRIPTION OF INVENTION

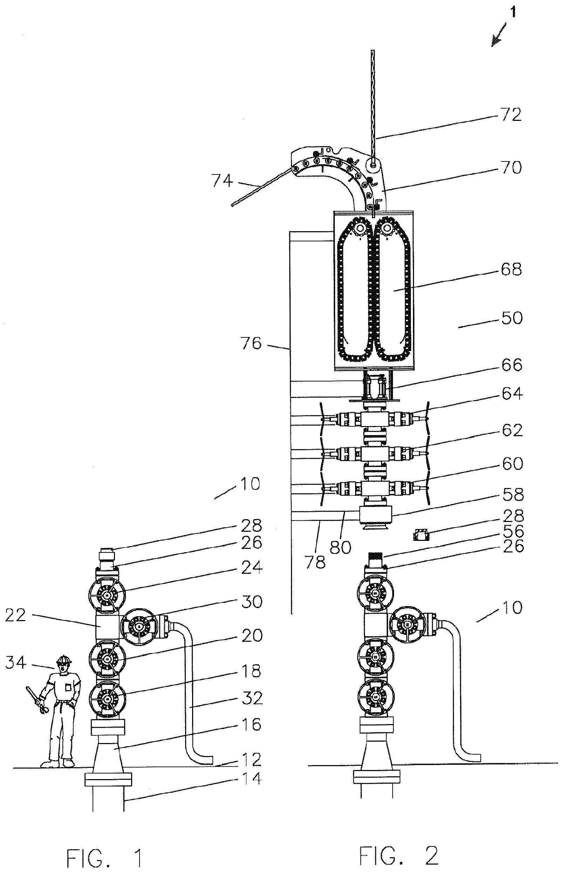

Referring to the illustrations, drawings, and pictures, and to Figures 1 and 2 in particular, reference character 1 generally designates a new and improved hydraulically activated connector in accordance with the present invention. Invention 1 is generally used in oil and gas well operations and may be utilized in other operations not associated with oil and gas operations. For purposes of convenience, the reference numeral 1 may generally be utilized for the indication of the invention, portion of the invention, preferred embodiments of the invention and so on. It is also to be understood that invention 1 should not be considered limited to just a "remotely activated connection device for a spiral shoulder connection" and the term should not be considered to limit the invention to such.

Referring now to Figure 1, Christmas tree 10 is shown above a surface 12, which can be land or the deck of a platform. Wellhead 14 suspends the casing (cemented pipe) within an oil or gas well, tubing spool 16 suspends the tubing (removable pipe) within the well, master valves 18 and 20, which are the primary safety control, tee 22 which provides a production outlet, a swab valve 24 to open the well for servicing, a top sub 26, tree cap 28 as the connection at the top, and wing valve 30 to open production flow into pipeline 32. A man 34 is shown for an illustration of the general size of the components.

Referring now to Figure 2, service tool package 50 is shown being landed on Christmas tree 10. Tree cap 28 has been removed from tree cap top sub 26, leaving a male thread 56 exposed for engaging. Connector 58 is at the bottom of the service tool package 50 and utilizes the features of this invention to engage the male thread 56 of top sub 26. Blowout preventers 60, 62 and 64, safety slips 66 for emergency stop of coiled tubing 74, coiled tubing injector head 68, multi-roller sheave 70, crane lifting line 72, and the coiled tubing 74 are shown. Multi-line control umbilical 76 is shown with lines connecting to various components. Line 78 serves to lock connector 58 and line 80 serves to unlock connector 58 remotely.

The Figures 1 and 2 spacing between the Christmas trees 10 is illustrious of the actual spacing of Christmas trees such that when multiple Christmas trees are being serviced different operations will require repeated moving of the service tool package 50 between the Christmas trees 10 by the crane lifting line 72. Additionally, the size of the service components is understood by the comparison to the size of the man 34. Blowout preventers 60, 62, and 64 are shown for illustration, however, a fracking tree several times the size of the blowout preventers and strippers generally smaller than the blowout preventers may also be required. Logging may also be required in which a tall chamber holding logging tools may need to be landed on the top of the blowout preventers to do downhole logging or analysis of the formations. Clearly there is a need for a remote connection at the top of the Christmas tree 10 rather than having a person climb up to make up a threaded connection or remove it repeatedly to make up a flanged connection.

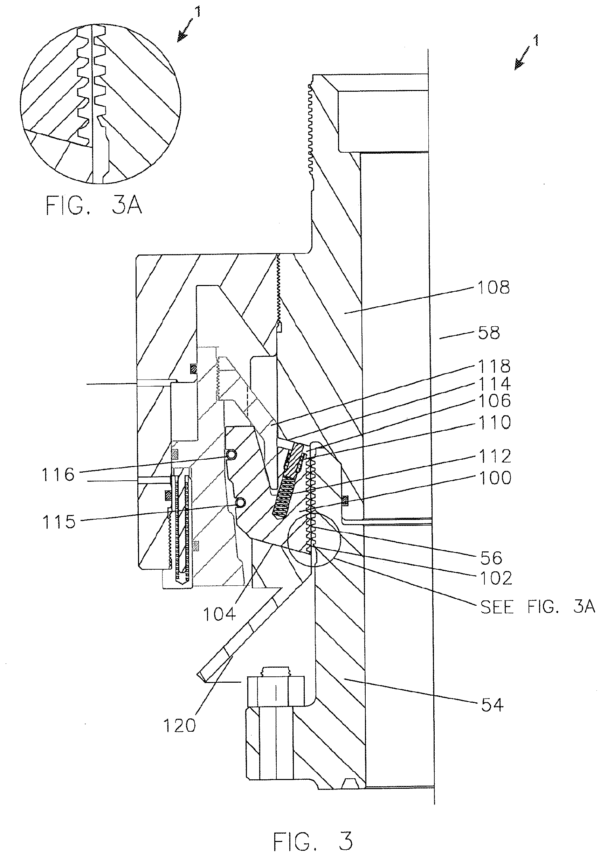

Referring now to Figure 3, connector 58 is shown having dog segments 100 with threads 102 ready to engage the male threads 56 of top sub 26. Dog segments 100 are sitting on inclined shoulder 104 of window 106 of main body 108. The angle of the inclined shoulder 104 is slightly greater than the angle of the male threads 56, as will be discussed later. Pin 110 is extended by spring 112 to or near to surface 114 in window 106 of body 108 to keep the segments 100 adjacent to inclined shoulder 104 until pushed out of position. Garter springs 115 and 116 urge threads 102 on dog segments 100 into engagement with male threads 56 on top sub 26, but movement of dog segments 100 is presently retrained by tang 118. Body 108 also has a funnel 120 at its lower end to assist in guiding the connector 58 into engagement with top sub 26.

Referring now to Figure 3A, and enlarged view of the thread profile position at this time is shown.

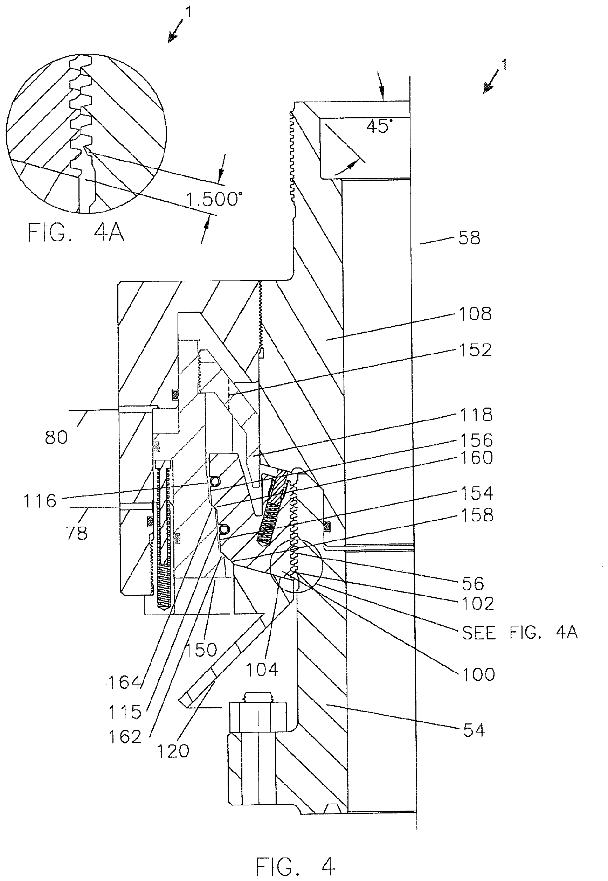

Referring now to Figure 4, flow and pressure have been introduced through line 78 to start moving piston 150 up and it takes tang body 152 and its tang 118 portion. As this happens, dog segments 100 are free to be moved inwardly by garter springs 115 and 116 and threads 102 engage male threads 56. As there is no orientation between the threads 102 and male threads 56, there is a low chance that the threads may engage perfectly, but it is highly likely they will not. As Acme threads have a large flat area on the top, they are most likely to simply land flat on flat. The one thing you do not want to happen is for the threads 102 to move in radially and partially engage male threads 56. In order to prevent this the angle of inclined shoulder 104 is slightly more than the angle of the side of the Acme thread so that if engagement starts, it will be complete engagement. Acme threads have a 14 ½ degree side angle, so the angle of the inclined shoulder would be about 16 degrees.

Dog segment 100 provides dual outside tapers, shallow tapers 154 and 156 and steeper tapers 158 and 160 As the piston 150 moves to this position, the shallow tapers 154 and 156 are not engaged, but rather the steeper tapers 158 and 160 are engaged by mating shoulders 162 and 164. These angles are at approximately 45 degrees and so are as likely to push the dog segments 100 upwardly as inwardly. As piston 150 continues to move upwardly, the threads 102 will slide on the top of the male threads 56 until they are properly engaged and then the combination of the garter springs 115 and 116 and steeper tapers 162 and 164 will move threads 102 into full engagement with male threads 56.

Referring now to Figure 4A, and enlarged view of the thread profile position at this time is shown, illustrating the 1 ½ degree difference.

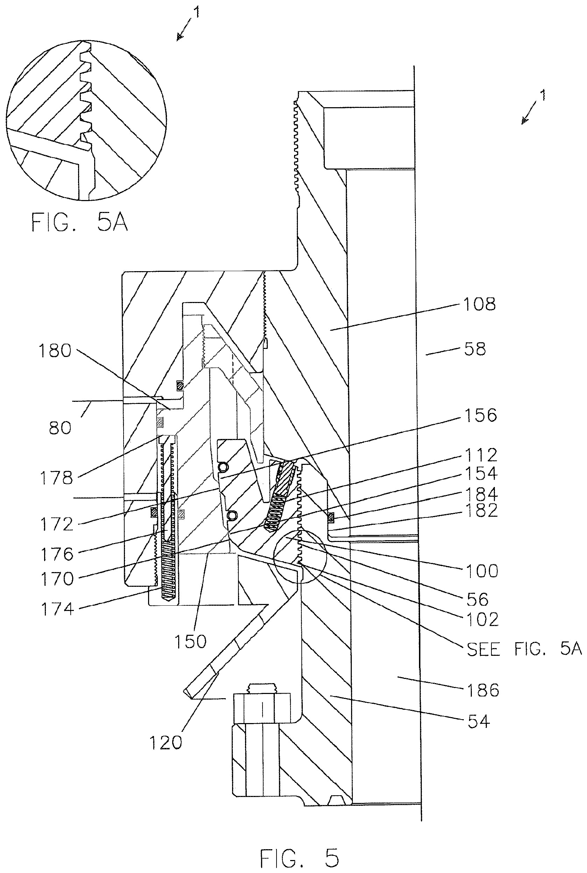

Referring now to Figure 5, piston 150 has continued to travel up until shallow tapers 154 and 156 are engaged by shallow tapers 170 and 172 tending to friction lock the piston 150 in position. In this movement as dog segment 100 has been moved up, spring 112 has been compressed by the upward movement of piston 150. Springs 174 and plungers 176 are extended against shoulder 178 of piston 150 with enough spring load to prevent the piston 150 from falling back to disengage the dog segments 100 from the male threads 56. When pressure is introduced into line 80, the larger piston area of shoulder 180 when compared to the piston area of shoulder 178 will insure the unlocking and overriding of the springs 174 to release the connector 58.

Interface 182 between main body 108 and tree cap top sub 54 is sealed by seal 184 such that when pressure is introduced into bore 186 an axial separation force is imposed on main body 108 and tree cap top sub 54 which is resisted by male thread 56, threads 102, and inclined shoulder 104. With a conventional Acme thread application with its 14 ½ degree angles, an outward force is generated towards piston 150 tending to drive it to the unintended release position. With the angle of the inclined shoulder 104 being greater than the engagement angle on the Acme threads (as seen in Fig. 4A), the net force direction is towards the centerline of the parts rather than outward or away from the centerline. This achieves the desired "lock over center" characteristic of the connector 58.

Referring now to Figure 5A, an enlarged view of the thread profile position at this time is shown.

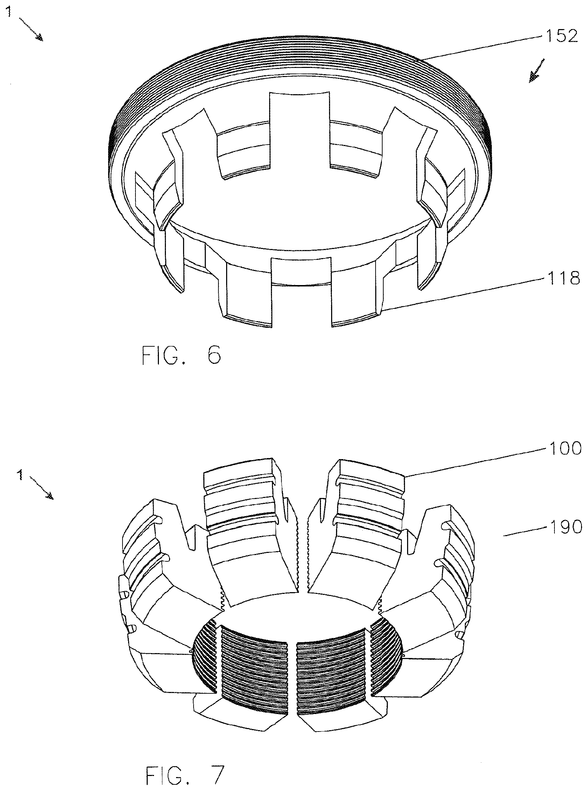

Referring now to Figure 6, a perspective view of tang body 152 showing the tangs 118 is shown.

Referring now to Figure 7, a ring of dog segments 190 is shown as a group of eight dog segments 100.

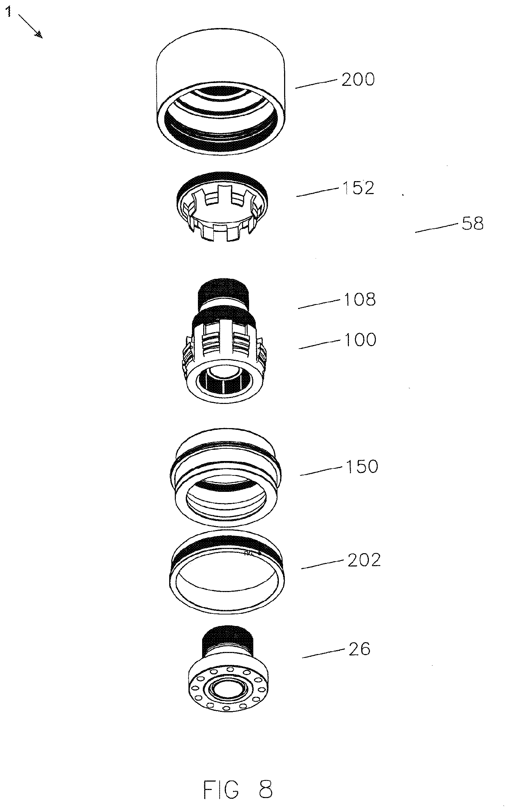

Referring now to Figure 8, a perspective exploded view of the connector 58 is shown with outer body 200, tang body 152, main body 108, dog segments 100, piston 150, gland 202, and top sub 26.

It is therefore contemplated that the current invention 1 may be a method of connecting a connecting member to a threaded profile member, comprising; providing one or more segments with a female threaded profile; holding said segments out of engagement from said threaded profile member while engaging said connecting member with said threaded profile member; releasing said one or more segments to allow engagement with said threaded profile member; moving said one or more segments axially of said threaded profile member to allow the threads of said segments to engage the threads of said threaded profile member; causing said threads of said segments to engage said threads of said threaded profile member; securing said segments in the engaged position; and so forth.

It is also understood that the spring load said one or more segments moves towards the engaged position; that the reverse angle may allow full engagement when engagement starts; may include lock over center characteristic; may be hydraulic, mechanical, and or air pressure; threads may be Acme, V, and or generic; may include a remote and or manual activation.

The particular embodiments disclosed above are illustrative only, as the invention may be modified and practiced in different but equivalent manners apparent to those skilled in the art having the benefit of the teachings herein. Changes may be made in the combinations, operations, and arrangements of the various parts and elements described herein without departing from the scope of the invention as set out in the claim.

Furthermore, names, titles, headings and general division of the aforementioned are provided for convenience and therefore, should not be considered limiting.

## Claims

1. A method of connecting a connecting member (58) to a threaded profile member (26), comprising:
providing one or more dog segments (100) with a female threaded profile (102),
holding said dog segments out of engagement from said threaded profile member (26) while engaging said connecting member with said threaded profile member,
releasing said one or more dog segments to allow engagement with said threaded profile member,
moving said one or more dog segments axially of said threaded profile member to allow the threads of said dog segments to engage the threads of said threaded profile member,
causing said threads of said dog segments to engage said threads of said threaded profile member, and
securing said dog segments in the engaged position,
wherein said dog segments sit on an inclined shoulder (104) of a window (106) of a main body (108) of the connecting member,
wherein the angle of the inclined shoulder (104) is greater than the angle of male threads (56) on the threaded profile member, and
wherein the female threaded profile (102) of the dog segments (100) and the male threads (56) on the threaded profile member (26) are flat-topped threads.

## Patentansprüche

1. Verfahren zum Verbinden eines Verbindungselements (58) mit einem Gewindeprofilelement (26), umfassend:
Bereitstellen von einem oder mehreren Klauensegmenten (100) mit einem Innengewindeprofil (102),
Halten der Klauensegmente außerhalb des Eingriffs mit dem Gewindeprofilelement (26), während das Verbindungselement mit dem Gewindeprofilelement in Eingriff gebracht wird,
Freigeben des einen oder der mehreren Klauensegmente, um den Eingriff mit dem Gewindeprofilelement zu ermöglichen,
Bewegen des einen oder der mehreren Klauensegmente in der Axialrichtung des Gewindeprofilelements, um zu ermöglichen, dass die Gewindegänge der Klauensegmente mit den Gewindegängen des Gewindeprofilelements in Eingriff gelangen,
Bewirken, dass die Gewindegänge der Klauensegmente mit den Gewindegängen des Gewindeprofilelements in Eingriff gelangen, und
Fixieren der Klauensegmente in der Eingriffsstellung,
wobei die Klauensegmente auf einem schrägen Absatz (104) eines Fensters (106) eines Hauptkörpers (108) des Verbindungselements sitzen,
wobei der Winkel des schrägen Absatzes (104) größer als der Winkel der Außengewindegänge (56) an dem Gewindeprofilelement ist, und
wobei es sich bei dem Innengewindeprofil (102) der Klauensegmente (100) und den Außengewindegängen (56) an dem Gewindeprofilelement (26) um Gewindegänge mit abgeflachter Spitze handelt.

## Revendications

1. Procédé servant à relier un élément de liaison (58) à un élément à profil fileté (26), comportant les étapes consistant à :
mettre en œuvre un ou plusieurs segments de crabot (100) ayant un profil fileté femelle (102),
retenir lesdits segments de crabot hors de prise par rapport audit élément à profil fileté (26) tout en mettant en prise ledit élément de liaison avec ledit élément à profil fileté,
libérer lesdits un ou plusieurs segments de crabot pour permettre une mise en prise avec ledit élément à profil fileté,
déplacer lesdits un ou plusieurs segments de crabot dans le sens axial par rapport audit élément à profil fileté pour permettre aux filets desdits segments de crabot de se mettre en prise avec les filets dudit élément à profil fileté,
amener lesdits filets desdits segments de crabot à se mettre en prise avec lesdits filets dudit élément à profil fileté, et
assujettir lesdits segments de crabot dans la position de mise en prise,
dans lequel lesdits segments de crabot reposent sur un épaulement incliné (104) d'une fenêtre (106) d'un corps principal (108) de l'élément de liaison,
dans lequel l'angle de l'épaulement incliné (104) est supérieur à l'angle de filets mâles (56) sur l'élément à profil fileté, et
dans lequel le profil fileté femelle (102) des segments de crabot (100) et les filets mâles (56) sur l'élément à profil fileté (26) sont des filets à sommet plat.
